# EUROPÄISCHE PATENTSCHRIFT

(11) **EP 0 708 137 B1**
(45) Veröffentlichungstag und Bekanntmachung des Hinweises auf die Patenterteilung: **31.03.1999**
(21) Anmeldenummer: 95116026.6
(22) Anmeldetag: 11.10.1995
(51) Int. Cl.: C08K 3/36, C08K 3/04, C08K 5/01, C08L 9/06

(54) **Vulkanisierbare Kautschukmischung und Reifen auf Basis derselben**
Vulcanizable rubber composition and tire prepared therefrom
Composition de caoutchouc vulcanizable et pneumatique fabriqué à partir de cette composition

(30) Priorität: 21.10.1994 DE 4437645
(43) Veröffentlichungstag der Anmeldung: 24.04.1996
(73) Patentinhaber: Uniroyal Englebert Reifen GmbH, D-52068 Aachen (DE)
(72) Erfinder: Russell, Richard, Dr., B-4731 Eynatten (BE); Söhnen, Dietmar, Dr., D-52074 Aachen (DE)
(74) Vertreter: Schneider, Egon

(56) Entgegenhaltungen:
- EP-A- 0 501 227
- EP-A- 0 620 250
- GB-A- 2 239 870

## Beschreibung

Die vorliegende Erfindung betrifft Reifen, umfassend einen Reifenlaufstreifen aus einer mit Schwefel vuklanisierten, keine aromatische Prozeßöle enthaltenden Kautschukmischung.

Es ist bekannt, die elastomeren Komponenten in einer Kautschukmischung umfassend Naturkautschuk, synthetisches Polyisopren (Synthesekautschuk), lösungs- oder emulsionspolymerisiertem Styrol-Butadien, Polybutadien-Kautschuk oder deren Gemische mit Weichmachern zu strecken.

Zu diesem Zweck wurden vorzugsweise im Handel erhältliche Produkte in Form eines aromatischen Petroliumraffinats (aromatisches Prozessöl) eingesetzt (DE-A-10 79 316). Derartige aromatische Öle verbessern die Elastizität der Kautschukmischung und damit die Verarbeitbarkeit der hochviskosen Mischungszusätze. Sie reduzieren ferner die Härte, das Modul und die Elastizität der Vulkanisationsprodukte. Diese Produkte hatten jedoch die nachteilige Eigenschaft, daß sie, wann immer sie mit Oberflächen anderer Objekte über einen längeren Zeitraum hinweg in Kontakt kamen, in einem mehr oder weniger großen Umfang braune bis schwarze Flecken hinterließen, die kaum zu entfernen waren.

Die GB-A-2 239 870 schlägt hierzu vor, in Kautschukzusammensetzungen Weichmacher einzusetzen, die ausgewählt sind aus Estern (z.B. Dioctylphthalat), Naphthenöl, Paraffinöl oder deren Gemischen sowie ferner ein flüssiges Polymer (z.B. flüssiges Polyisopren) und/oder Asphaltene einzusetzen.

Derartige Kautschukmischungen weisen jedoch immer noch den Nachteil auf, daß durch den darin enthaltenen Ruß schwarze Markierungen durch Abrieb auf Oberflächen von Gegenständen, z.B. Böden auftreten.

Daher war es eine Aufgabe der vorliegenden Erfindung, einen Reifen, umfassend einen Laufstreifen aus einer vulkanisierten Kautschukmischung, zur Verfügung zu stellen, deren Vulkanisat den Nachteil des Auftretens der schwarzen Markierungen durch Abrieb und der dunklen Verfärbung von Oberflächen durch längeren Kontakt des Vulkanisats mit diesen Oberflächen nicht aufweist. Dabei sollten die ansonsten mit den bekannten Zusammensetzungen verbundenen guten physikalischen Eigenschaften des Reifens nicht nachteilig beeinflußt werden.

Diese Aufgabe wurde überraschenderweise gelöst durch einen Reifen, umfassend einen Reifenlaufstreifen aus einer mit Schwefel vulkanisierten, keine aromatischen Prozeßöle enthaltenden Kautschukmischung umfassend
- wenigstens ein Elastomer-Copolymer eines konjugierten Diens und einer aromatischen Vinylverbindung,
- 20-150 Gew.-Teilen, bezogen auf 100 Gew.-Teile der Gesamtmenge Elastomer, eines Füllstoffs,
- 5 bis 60 Gew.-Teilen, bezogen auf 100 Gew.-Teile Elastomer, wenigstens eines Weichmachers,
- 1 - 25 Gew.-Teilen, bezogen auf 100 Gew.-Teile Elastomer, eines flüssigen Polymers und/oder Asphaltenes,
- gegebenenfalls bis zu 70 Gew.-Teile, bezogen auf die Gesamtelastomermenge, wenigstens eines Dien-Elastomers als weiterem Polymer sowie
- gegebenenfalls übliche Zusätze
dadurch gekennzeichnet, daß
- der Ruß einen mittleren Teilchendurchmesser von weniger als 19 nm (gemessen nach ASTM D 3849-89) und eine EM-Oberfläche von wenigstens 130 m²/g (gemessen nach ASTM D 3849-89) besitzt
- die Kautschukmischung als Füllstoff eine feinverteilte, gefällte Kieselsäure und den Ruß im Volumenverhältnis 1:1 bis 20:1 enthält, und
- der Weichmacher ausgewählt ist aus Dioctylphthalat, Dibutylphthalat, Dioctyladipat oder deren Gemischen.

Unter aromatischen Prozessölen versteht man Mineralölweichmacher, die über 25 Gew.-% vorzugsweise über 35 Gew.-% aromatische Bestandteile, weniger als 45 Gew.-% naphthenische und weniger als 45 Gew.-% paraffinische Bestandteile enthalten. Ferner kann eine Klassifizierung in Öltyp 101 und 102 nach ASTM D 2226 erfolgen. Für weitere Einzelheiten wird auf "Kautschuk + Gummi", 41. Jahrgang, Heft 3/88, Seiten 248-253, Dr. Alfred Hüttig Verlag, Heidelberg verwiesen.

Die aus dieser vulkanisierbaren Kautschukmischung durch Vulkanisation erhältlichen Vulkanisationsprodukte weisen gegenüber den bekannten, vulkansierbaren Kautschukmischungen erhaltenen Vulkanisationsprodukten keinerlei Nachteile in ihren physikalischen Eigenschaften auf, zum Teil sind sie in Abhängigkeit von der Morphologie der verwendeten Kieselsäuren sogar noch deutlich verbessert.

Die erfindungsgemäße Kautschukmischung enthält den Füllstoff in einer Menge von vorzugsweise 40-120 Gew.-Teile, bezogen auf 100 Gew.-Teile der Elastomere (Polymere).

Besonders bevorzugt ist ein Volumenverhältnis von feinverteilter, gefällter Kieselsäure zu Ruß von 1.5:1 bis 20:1, besonders 2:1 bis 20:1.

Gemäß der Erfindung kann grundsätzlich jede feinverteilte, gefällte Kieselsäure eingesetzt werden, wie sie üblicherweise bei der Herstellung von Kautschukmischungen eingesetzt wird und die bei dem auf diesem Gebiet tätigen Fachmann als bekannt vorausgesetzt werden kann. In diesem Zusammenhang sei insbesondere auf die in der EP-A-0 501 227, EP-A-0 157 703 und der DE-A-2 410 014 beschriebenen Kieselsäuren verwiesen.

Allgemein können demnach gefällte und feinverteilte Kieselsäuren als Füllstoff in der erfindungsgemäßen Zusammensetzung eingesetzt werden, die eine BET-Fläche von 40-350 m²/g, insbesondere von 100-250 m²/g, eine CTAB-Fläche von 50-350 m²/g, vorzugsweise von 100-250 m²/g und einem mittleren Teilchendurchmesser von 10-150 µm, vorzugsweise 10-100 µm und eine DBP-Absorption 50-350 ml/100 g, vorzugsweise 150-250 ml/100 g besitzen.

Besonders bevorzugt ist jedoch eine Kieselsäure mit besonderer Morphologie, die erhältlich ist durch Umsetzung von Alkalisilikat mit Mineralsäuren bei Temperaturen von 60°C bis 95°C unter Aufrechterhaltung eines pH-Wertes von 7,5 bis 10,5 unter kontinuierlicher Rührung, die je nach Bedarf intensiviert werden kann, und unter Einstellung eines Feststoffgehaltes in der Fällungssuspension von 90 bis 120 g/l, einer anschließenden Rücksäuerung auf pH-Werte ≤ 5, Filtration, Trocknung und bei Bedarf einer Vermahlung und/oder Granulation.
Diese Kieselsäuren sind dadurch gekennzeichnet, daß sie N₂-Oberflächen (Areameter, Fa. Ströhlein, gemäß ISO 5794/Annex D) von 35 m²/g bis 350 m²/g, insbesondere 100 bis 200 m²/g, bei einem BET/CTAB-Verhältnis von 0,8 bis 1,2 (pH 9, gemäß Jay, Janzen und Kraus in "Rubber Chemistry and Technology" 44 (1971) 1287), besitzen und gleichzeitig, wie unten in der Tabelle I angegeben, je nach Oberflächenbereich ein Porenvolumen, gemessen mittels Quecksilberporosimetrie (DIN 66 133), Silanolgruppendichten, gemessen in Form der Sears-Zahlen (G.W. Sears, Analyt. Chemistry 12, 1981-83 (1956)) sowie eine mittlere Aggregatgröße, gemessen mittels Photonenkorrelationsspektroskopie, besitzen:

**Tabelle I**

| N₂-Oberfläche | Hg-Porosimetrie | Sears-Zahl V₂ | Mittlere Aggregatgröße |
|---|---|---|---|
| [m²/g] | [ml/g] | [ml] | [nm] |
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

Die Kieselsäuren sind ferner gekennzeichnet durch gute Vermahlbarkeit, wiedergegeben durch die mittlere Teilchengröße nach Malvern-Laserbeugung [D (4,3)] von ≤ 11 µm, insbesondere ≤ 10 µm, gemessen nach Vermahlung auf einer Alpine-Kolloplex-Prallstiftmühle (Z 160) bei einer Durchsatzleistung von 6 kg/h.

Diese Vermahlbarkeit kann charakterisiert werden u.a. durch die Energie, die benötigt wird, um eine bestimmte Teilchenfeinheit zu erzielen oder umgekehrt durch die Teilchenfeinheit, die sich einstellt, wenn ein Mahlaggregat bei gleicher Leistung und gleichem Produktdurchsatz betrieben wird. Letztere ist der Einfachheit wegen die Methode der Wahl. Als Mühlentyp wird eine Alpine-Kolloplex-Prallstiftmühle (Z 160) eingesetzt und bei einem konstanten Produktdurchsatz von 6 kg/h betrieben.

Zur Charakterisierung der Teilchenfeinheit wird der mittlere, volumengewichtete Teilchendurchmesser MTG [D(4,3)] aus der Messung mittels Laserbeugung gewählt (Fa. Malvern Instruments, Modell 2600c).
Für weitere Einzelheiten zu dieser Kieselsäure mit der besonderen Morphologie wird auf die DE-A-4 334 201 verwiesen.

Im Gegensatz zu Ruß ist die Oberfläche von feinverteilter, gefällter Kieselsäure gegenüber Kautschuk inaktiv. Aus diesem Grund ist es notwendig ab einem Anteil von mehr als 20 Gew.-Teilen Kieselsäure, die Kieselsäure mit einem Silankupplungsmittel zu behandeln, um die Bindung zwischen der Kieselsäure-Oberfläche mit dem Kautschuk sicherzustellen. Diese Behandlung der Kieselsäure mit dem Silankupplungsmittel kann während des Mischens des Kautschuks oder Kautschuk-Gemisches mit der Kieselsäure erfolgen oder vor dem Mischen mit dem Kautschuk im Sinne einer Vorbehandlung.

Die Oberflächen der vorgenannten Kieselsäuren, einschließlich der Kieselsäuren mit der besonderen Morphologie, können zusätzlich mit Silankupplungsmitteln (Organosilanen) der nachfolgenden Formeln I bis III

[Rₙ¹-(RO)₃₋ₙ Si-(Alk)ₘ - (Ar)ₚ]_{q}[B] (I),

Rₙ¹ (RO)₃₋ₙ Si-(Alkyl) (II),

oder

Rₙ¹ (RO)₃₋ₙ Si-(Alkenyl) (III),

modifiziert werden, in denen bedeuten
- B:: -SCN, -SH, -Cl, -NH₂ (wenn q = 1) oder -Sₓ (wenn q = 2),
- R und R¹:: eine Alkylgruppe mit 1 bis 4 Kohlenstoffatomen, den Phenylrest, wobei alle Reste R und R¹ jeweils die gleiche oder eine verschiedene Bedeutung haben können und R zusätzlich eine C₁-C₄-Alkoxygruppe sein kann,
- n:: 0,1 oder 2,
- Alk:: einen zweiwertigen geraden oder verzweigten Kohlenwasserstoffrest mit 1 bis 6 Kohlenstoffatomen,
- m:: 0 oder 1,
- Ar:: einen Arylenrest mit 6 bis 12 C-Atomen, bevorzugt 6 C-Atome,
- p :: 0 oder 1 mit der Maßgabe, daß p und n nicht gleichzeitig 0 bedeuten,
- x:: eine Zahl von 2 bis 8,
- Alkyl:: einen einwertigen geraden oder verzweigten gesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Im Zusammenhang mit den Organosilanen, deren Herstellung und deren Kombination mit Kieselsäuren wird ferner auf die nachfolgende Literatur verwiesen:
S. Wolff "Reinforcing and Vulcanization Effects of Silane Si 69 in Silica-Filled Compounds", Kautschuk + Gummi, Kunststoffe 4, 280-284 (1981);
S. Wolff "Silanes in Tire Compounding After Ten Years - Review", Vortrag gehalten anläßlich des Third Annual Meeting and Conference on Tire Science and Technology, The Tire Society, 28.-29. März 1984, Akron, Ohio, USA;
S. Wolff "Optimization of Silane-Silica OTR Compounds. Part 1: Variations of Mixing Temperature and Time During the Modification of Silica with Bis(3-triethoxysilylpropyl)-tetrasulfide", Rubber Chem. Technol. 55, 967-989 (1982);
S. Wolff, R. Panenka " Present Possibilities to Reduce Heat Generation of Tire Compounds", Vortrag gehalten anläßlich der International Rubber Conference IRC'85 in Kyoto, Japan;
S. Wolff, R. Panenka, E.H. Tan "Reduction of Heat Generation in Truck Tire Tread and Subtread Compounds", Vortrag gehalten anläßlich der International Conference on Rubbers and Rubber-like Materials, Jamshedpur, Indien, 6.-8. November 1986;
S. Wolff "The Influence of Fillers on Rolling Resistance", Vortrag gehalten anläßlich einer Tagung der Rubber Division, American Chemical Society, New York/NJ, USA, 8.11. April 1986.

Die erfindungsgemäß für die Vorbehandlung der Kieselsäuren eingesetzten Silankupplungsmittel sind dem Fachmann aus dem weiteren Stand der Technik, insbesondere aus der EP-A-0 447 066, der DE-A-2 062 883 oder der DE-A-2 457 446 bekannt. Bevorzugt im Rahmen der vorliegenden Erfindung als Silankupplungsmittel sind insbesondere solche Silane, die wenigstens eine Alkoxylgruppe im Molekül besitzen. Diese Silane sind ausgewählt aus Bis(3-triethoxysilylpropyl)-tetrasulfid, Bis(2-triethoxysilylethyl)tetrasulfid, Bis(3-trimethoxysilylpropyl)tetrasulfid, Bis(2-trimethoxysilylethyl)tetrasulfid, 2-Mercaptoethyltriethoxysilan, 3-Mercaptopropyltriethoxysilan, 2-Mercaptoethyltrimethoxysilan, 2-Mercaptoethyltriethoxysilan, 3-Nitropropyltrimethoxysilan, 3-Nitropropyltriethoxysilan, 3-Chloropropyltrimethoxysilan, 3-Chloropropyltriethoxysilan, 2-Chloroethyltrimethoxysilan, 2-Chloroethyltriethoxysilan, 3-Trimethoxysilylpropyl-N,N-dimethylthiocarbamoyltetrasulfid, 3-Triethoxysilylpropyl-N,N-dimethylthiocarbamoyltetrasulfid, 2-Triethoxysilyl-N,N-dimethylthiocarbamoyltetrasulfid, 3-Trimethoxysilylpropybenzothiazoltetrasulfid, 3-Triethoxysilylpropylbenzothiazoltetrasulfid, 3-Triethoxysilylpropylmethacrylatmonosulfid, 3-Trimethoxysilylpropylmethacrylatmonosulfid. Darunter sind Bis(3-triethoxysilylpropyl)tetrasulfid und 3-Trimethoxysilylpropylbenzothiazoltetrasulfid bevorzugt. Des weiteren können Bis(3-diethoxymethylsilylpropyl)tetrasulfid, 3-Mercaptopropyldimethoxymethylsilan, 3-Nitropropyldimethoxymethylsilan, 3-Chloropropyldimethoxymethylsilan, Dimethoxymethylsilylpropyl-N,N-dimethylthiocarbamoyltetrasulfid, Dimethoxymethylsilylpropylbenzothiazoltetrasulfid, 3-Thiocyanatopropyltriethoxysilan, 3-Thiocyanatopropyltrimethoxysilan, Trimethoxyvinylsilan, Triethoxyvinylsilan als Silankupplungsmittel eingesetzt werden.

Das Silankupplungsmittel wird in einer Menge von 0,2-30 Gew.-Teilen, vorzugsweise von 0,5-15 Gew.-Teilen, bezogen auf 100 Gew.-Teile der Kieselsäure eingesetzt. Die Reaktion zwischen der Kieselsäure und dem Silankupplungsmittel kann während der Herstellung der Mischung (in situ) oder, alternativ hierzu, außerhalb durchgeführt werden. Letzteres führt zu einer vorbehandelten (vormodifizierten) Kieselsäure, die als solche der Mischung zugesetzt werden kann.

Als Füllstoff bevorzugt ist ein Ruß, der eine Dibutylphthalat-Absorption (DBPA-Zahl) von 30 bis 180 cm³/100 g (ASTM D 2414), eine Iodzahl von 10 bis 250 g/kg (ASTM D 1510) sowie eine CTAB-Zahl von 5 bis 150 m²/g (ASTM D 3765) besitzt.

Besonders bevorzugt ist jedoch ein Ruß besonderer Morphologie. Dieser Ruß besitzt einen mittleren Teilchendurchmesser von weniger als 18 nm (ASTM D 3849-89) und eine EM-Oberfläche (Electron Microscope Image Analysis, ASTM D 3849-89) von wenigstens 135 m²/g. Solche Ruße besonderer Morphologie sind im Stand der Technik bekannt und als Handelsprodukt unter der Bezeichnung N 121 (mittlerer Teilchendurchmesser 18,8 nm, EM-Oberfläche 131 m²/g), N 110 (mittlerer Teilchendurchmesser 17,8 nm, EM-Oberfläche 137 m²/g), HV-3396 (mittlerer Teilchendurchmesser 15,4 nm, EM-Oberfläche 165 m²/g) erhältlich. Derartige Ruße besitzen ferner eine Stickstoffoberfläche (N₂SA) von über 120 m²/g, vorzugsweise über 125 m²/g.

Für nähere Einzelheiten wird verwiesen auf C.R. Herd et al, in "Morphology of Carbon Black Aggregates: Fractal versus Euclidean Geometry", Paper Nr. 38, vorgetragen auf dem Meeting of the Rubber Division, American Chemical Society, Toronto, Ontario, Canada, 21.-24. Mai 1991.

Das erfindungsgemäß eingesetzte konjugierte Dien ist ausgewählt aus 1,3-Butadien, Isopren, 2,3-Dimethyl-1,3-butadien, Chloropren, 1,3-Pentadien, Hexadien oder Gemischen davon.

Die erfindungsgemäß eingesetzte aromatische Vinylverbindung ist ausgewählt aus Styrol, α-Methylstyrol, p-Methylstyrol, o-Methylstyrol, p-Butylstyrol, Vinylnaphthalin oder Gemischen davon.

Das molare Verhältnis von konjugiertem Dien zur aromatischen Vinylverbindung beträgt 98:2 bis 40:60, vorzugsweise 95:5 bis 55:45.

Besonders bevorzugt ist es, Copolymere für die Kautschukmischung einzusetzen, die durch Lösungspolymerisation oder Emulsionspolymerisation des konjugierten Diens mit der aromatischen Vinylverbindung in einem geeigneten Lösungsmittel erhalten werden. Geeignete Lösungsmittel für die Lösungspolymerisation sind insbesondere Pentan, Hexan, Cyclohexan, Heptan oder deren Gemische sowie Benzol, Xylol, Toluol oder deren Gemische sowie Tetrahydrofuran, Diethylether oder deren Gemische oder Gemische der genannten Kohlenwasserstoffe mit den genannten aromatischen Kohlenwasserstoffen.

Gemäß der vorliegenden Erfindung kann die Kautschukmischung ein Copolymer von einem Dien und einer aromatischen Vinylverbindung, aber auch ein Gemisch von wenigstens zwei unterschiedlichen Copolymeren eines Diens und einer aromatischen Vinylverbindung enthalten. Das Dien und die aromatische Vinylverbindung der verschiedenen Copolymere sind jeweils unabhängig voneinander aus den oben angeführten Verbindungen für das konjugierte Dien und die aromatische Vinylverbindung ausgewählt.

Besonders bevorzugt ist eine Kautschukmischung umfassend zwei unterschiedliche der oben genannten, insbesondere durch Lösungspolymerisation hergestellten Copolymere, die aus Styrol und Butadien erhältlich sind und einen unterschiedlichen Styrol- und/oder Vinylanteil aufweisen, der Styrol-anteil zwischen 8 und 40%, vorzugsweise zwischen 20 und 40%, der Vinylanteil zwischen 10 und 50%, vorzugsweise zwischen 20 und 50% beträgt. Dabei gilt, daß der Anteil Styrol + Vinyl +cis-/trans-Isomer in der Polymermolekülkette 100% ist. Die beiden unterschiedlichen Copolymere werden im Verhältnis 2:1 bis 1:2, vorzugsweise im Verhältnis 1:1 zueinander eingesetzt.

Die erfindungsgemäße Kautschukmischung kann ferner bis zu 70 Gew.-Teile, bezogen auf 100 Gew.-Teile Gesamtelastomermenge, mindestens eines Dien-Elastomers enthalten, das ausgewählt ist aus Naturkautschuk (NK), Polyisopren und Polybutadien oder Copolymeren aus Isopren und Butadien.

Diese Dien-Elastomere können aus den zugrundeliegenden Monomeren nach dem Fachmann bekannten Verfahren in Gegenwart von Übergangsmetallkatalysatoren und insbesondere solchen, die Kobalt, Titan, Nickel oder Neodym enthalten, hergestellt werden. Besonders überraschend wurde gefunden, daß die bedingt durch den Einsatz des Rußes mit besonderer Morphologie schon erheblich verbesserten Eigenschaften der aus der erfindungsgemäßen Kautschukmischung hergestellten Reifenlaufstreifen, durch die Verwendung von Dien-Elastomeren, die in Gegenwart von Neodym enthaltenden Katalysatoren hergestellt wurden, weiter verbessert werden können.

Besonders bevorzugt sind Polybutadien-Elastomere, die mit den oben genannten Katalysatoren hergestellt werden und die eine Mooney-Viskosität (ASTM D 1646 - ISO 289, 100 °C) von 30 bis 70 Einheiten, vorzugsweise von 40 bis 65 Einheiten aufweisen.

Hinsichtlich der Herstellung der Butadien-Elastomere in Gegenwart von Neodym enthaltenden Katalysatoren (Nd-BR) wird auf E. Lauretti et al, in "Tire Technology International", 1993, Seite 72 ff. verwiesen.

Darüberhinaus kann die Zusammensetzung bis zu 70 Gew.-Teile, bezogen auf 100 Gew.-Teile Gesamtelastomermenge, eines Copolymers aus einem Dien und einer aromatischen Vinylverbindung enthalten, welches durch Emulsionspolymerisation hergestellt ist. Hinsichtlich der in Frage kommenden Diene und aromatischen Vinylverbindungen wird auf die obigen Ausführungen verwiesen. Verfahren zur Durchführung derartiger Emulsionspolymerisationen sind dem Fachmann aus der einschlägigen Literatur bekannt.

Insbesondere für erhöhte Haftungseigenschaften des Laufstreifens bei Nässe enthält die Kautschukmischung 2-20 Gew.-%, bezogen auf die Kautschukmischung, Styrol.

Die Kautschukmischung enthält ferner wenigstens einen Weichmacher, der ausgewählt ist Dioctylphthalat (DOP), Dibutylphthalat (DBP) oder Dioctyladipat (DOA). Der Anteil der Weichmacher in der Kautschukmischung beträgt vorzugsweise 5 bis 10 Gew.-Teile, bezogen auf 100 Gew.-Teile Elastomer.

Die erfindungsgemäße Kautschukmischung ist ferner dadurch gekennzeichnet, daß die Asphaltene und/oder die flüssigen Polymere in einem Anteil von insgesamt 1 bis 25 Gew.-Teilen, vorzugsweise 1 bis 10 Gew.-Teilen, bezogen auf 100 Gew.-Teile Elastomer, enthalten sind. Die Asphaltene sind Bestandteile rohen Erdöls, die beim Lösen mit dem 30-fachen Volumen Heptan bei 18-28 °C ausfallen und in Benzol oder Kohlenstoffdisulfid löslich sind. Asphaltene sind im Handel erhältlich, z.B. von BP, Deutschland. Als flüssiges Polymer ist flüssiges Polyisopren bevorzugt. Das flüssige Polyisopren ist gekennzeichnet durch ein Molekulargewicht von 10 000 bis 60 000, vorzugsweise von 25 000 bis 50 000.

Die Kautschukmischung kann ferner die üblichen Zusätze in der üblichen Dosierung enthalten, wie insbesondere Alterungsschutzmittel, Schwefel, Vulkanisationsbeschleuniger (z.B. Sulfenamide, Thiazole, Guanidine) sowie weitere, jedoch andere Füllstoffe als die oben genannten, Aktivatoren (z.B. Stearinsäure, Zinkoxid), Wachse.

Der Reifenlaufstreifen wird hergestellt durch
1) Mischen von wenigstens einem Copolymeren eines konjugierten Diens und einer aromatischen Vinylverbindung, feinverteilter, gefällter Kieselsäure und Ruß als Füllstoff, dem Weichmacher, einem flüssigen Polymers und/oder Asphaltenes, gegebenenfalls wenigstens einem Dien-Elastomer als weiterem Polymer sowie der üblicherweise verwendeten Zusätze mit Ausnahme des Vulkanisationssystems unter gleichzeitigem Erwärmen der Zusammensetzung auf eine Temperatur bis zu 180°C,
2) Zumischen des Vulkanisationssystems bei einer Temperatur unterhalb der Vulkanisationstemperatur.

Hinsichtlich der Bedeutung des konjugierten Diens, der aromatischen Vinylverbindung, der Füllstoffe, des flüssigen Polymers, der Asphaltene, des Weichmachers, der üblichen Zusätze, des Vulkanisationssystems und des Silankupplungsmittels wird auf die obigen Ausführungen verwiesen.

Die Durchführung der Mischvorgänge und der Vulkanisation kann in den dem Fachmann bekannten Apparaturen (z.B. in Knetern) erfolgen. In der ersten Stufe des Mischens sollte eine Temperatur von wenigstens 130°C und vorzugsweise eine Temperatur zwischen 145 und 170°C eingestellt werden.

Das Verfahren kann während des Mischens ferner auch so geführt werden, daß das Gemisch zunächst auf die vorgegebene Temperatur erwärmt und dann wieder auf eine Temperatur unterhalb der Vulkanisationstemperatur abgekühlt wird. Dieser Zyklus ist wenigstens einmal zu durchlaufen und kann gegebenenfalls mehrfach wiederholt werden.

Der Reifenlaufstreifen wird nach dem Vulkanisieren in Gegenwart eines geeigneten Vulkanisationssystems unter üblichen, dem Fachmann bekannten Bedingungen als Reifenbauteil verwendet.

Die vorliegende Erfindung wird durch die nachfolgenden Beispiele erläutert, ohne jedoch darauf beschränkt zu sein.

### Beispiele:

Die gemäß der Erfindung einsetzbaren Kieselsäuren mit besonderer Morphologie können gemäß den nachfolgenden Beispielen 1 bis 3 hergestellt werden:

### Beispiel 1: Herstellung einer Kieselsäure im N₂-Oberflächenbereich von ≤ 100 m²/g

In einem Bottich werden unter Rühren 43,5 m³ heißes Wasser und so viel handelsübliches Natronwasserglas (Gewichtsmodul 3,42, Dichte 1.348) vorgelegt, bis pH 8,5 erreicht ist. Unter Aufrechterhaltung einer Fälltemperatur von 88°C und pH 8,5 werden nun 16,8 m³ des gleichen Wasserglases und Schwefelsäure (96%ig) in 150 Minuten gleichzeitig an gegenüberliegenden Stellen zugegeben. Es stellt sich ein Feststoffgehalt von 100 g/l ein. Danach wird weiter Schwefelsäure bis zum Erreichen von pH < 5 zugegeben. Der Feststoff wird auf Filterpressen abgetrennt, gewaschen und der Pressenteig einer Sprühtrocknung oder Drehrohrofentrocknung unterzogen und vermahlen oder auch nicht vermahlen.

Das erhaltene Produkt hat eine N₂-Oberfläche von 80 m²/g, eine Aggregatgröße von 1320 nm und eine Vermahlbarkeit von 10 µm. Die Sears-Zahl (V₂) beträgt 9,0 und die Hg-Porosimetrie 2,7 ml/g.

### Beispiel 2: Herstellung einer Kieselsäure im N₂-Oberflächenniveau von 100-150 m²/g

Es wird gemäß Beispiel 1 verfahren, mit der Ausnahme, daß in der Fällvorlage und während der Fällung ein pH-Wert von 9,0 konstant gehalten wird. Nach 135 Minuten stellt sich ein Feststoffgehalt in der Fällungssuspension von 93 g/l ein.

Die Kieselsäure hat eine N₂-Oberfläche von 120 m²/g, eine Vermahlbarkeit von 8,8 µm, eine Sears-Zahl von 9,1 bei einer Aggregatgröße von 490 nm und einem Hg-Porenvolumen von 2,85 ml/g.

### Beispiel 3: Herstellung einer Kieselsäure im N₂-Oberflächenniveau von 150-200 m²/g

Es wird gemäß Beispiel 1 verfahren mit der Ausnahme, daß in der Fällvorlage und während der Fällung ein pH-Wert von 9,5 konstant gehalten wird. Nach 135 Minuten stellt sich ein Feststoffgehalt in der Fällungssuspension von 93 g/l ein.

Die Kieselsäure hat eine N2-Oberfläche von 184 m²/g, eine Vermahlbarkeit von 8,7 µm, eine Sears-Zahl von 15,7 bei einer Aggregatgröße von 381 nm und einem Hg-Porenvolumen von 2,26 ml/g.

### Mischungsbeispiele:

Die Kautschukmischung A setzt sich zusammen aus

| | |
|---|---|
| 90 Gew.-Teile | Emulsions-Styrol-Butadien-Elastomer (SBR 1500; 23,5 Gew.-% Styrol-Anteil) |
| 10 Gew.-Teile | flüssiges Polyisopren (LIR-30, Molekulargewicht 29000, Iodzahl 368 g /100 g, Glasübergangstemperatur -63 °C, Dichte 0,91 g/cm³, Handelsprodukt der Firma Kuraray Co. Ltd., Japan) |
| 70 Gew.-Teile | gefällte, feinverteilte Kieselsäure (Ultrasil VN3, Handelsprodukt der Firma DEGUSSA AG, Deutschland) |
| 20 Gew.-Teile | Dioctylphthalat (DOP) |
| 2.5 Gew.-Teile | Zinkoxid |
| 1.0 Gew.-Teil | Stearinsäure |
| 1.5 Gew.-Teile | Antioxidant (N-Isopropyl-N'-phenyl-p-phenylendiamin) |
| 1.0 Gew.-Teil | Paraffinwachs (Sunproof®, Handelsprodukt der Firma Uniroyal) |
| 5.0 Gew.-Teile | Harz (Kollophonium) |
| 1.5 Gew.-Teile | DPG (N,N' -Diphenylguanidin) |
| 6.0 Gew.-Teile | Silankupplungsmittel (Si 69, Bis(3-triethoxysilylpropyl)tetrasulfid, Handelsprodukt der Firma Degussa) |
| 0.6 Gew.-Teile | CBS (N-Cyclohexyl-2-benzothiazolsulfenamid) |
| 1.8 Gew.-Teile | Schwefel |
| 6.0 Gew.-Teile | N-121 (mittlerer Teilchendurchmesser 18,8 nm EM-Oberfläche 131 m²/g, Handelsprodukt der Firmen Columbian Carbon oder Deutsche Gas-Ruß Werke, Deutschland) |

Die physikalischen Eigenschaften des Vulkanisats nach dem Erhitzen für 10 Minuten auf 170 °C sind wie folgt:

| | |
|---|---|
| Härte (RT) | 64 Shore A |
| Spannungswert (300% Dehnung) | 11 MPa |
| Bruchspannung | 400% |
| Zugfestigkeit | 14 MPa |
| Rückprallelastizität | 29% |
| Abrieb | 96 mm³ (RT, DIN 53516) |
| Markierung | nein (keine Markierung/Spur auf Untergrund) |
| Verfärbung | nein (keine Fleckenbildung bei Kontakt mit Oberfläche bei RT) |

Die Kautschukmischung B setzt sich zusammen aus:

| | |
|---|---|
| 90 Gew.-Teile | Emulsions-Styrol-Butadien-Elastomer (SBR 1500) |
| 10 Gew.-Teile | flüssiges Polyisopren (LIR-30) |
| 70 Gew.-Teile | gefällte, feinverteilte Kieselsäure (Ultrasil VN3) |
| 20 Gew.-Teile | Dioctylphthalat (DOP) |
| 5 Gew.-Teile | Asphaltene (Asphalten, Handelsprodukt der Firma BP, Deutschland) |
| 2.5 Gew.-Teile | Zinkoxid |
| 1.0 Gew.-Teil | Stearinsäure |
| 1.5 Gew.-Teile | Antioxidant (vgl. A) |
| 1.0 Gew.-Teil | Paraffinwachs (Sunproof®) |
| 1.5 Gew.-Teile | DPG |
| 1.3 Gew.-Teile | CBS |
| 1.9 Gew.-Teile | Schwefel |
| 6.0 Gew.-Teile | Silankupplungsmittel (Si 69) |
| 6.0 Gew.-Teile | N-121 |

Die physikalischen Eigenschaften des Vulkanisats nach dem Erhitzen für 10 Minuten auf 170 °C sind wie folgt:

| | |
|---|---|
| Härte (RT) | 64 Shore A |
| Spannungswert (300% Dehnung) | 11.5 MPa |
| Bruchspannung | 400% |
| Zugfestigkeit | 14 MPa |
| Rückprallelastizität | 29% |
| Abnutzung | 110 mm³ (RT, DIN 53516) |
| Markierung | nein |
| Verfärbung | nein |

## Patentansprüche

1. Reifen umfassend einen Reifenlaufstreifen aus einer mit Schwefel vulkanisierten, keine aromatischen Prozessöle enthaltenden Kautschukmischung umfassend
- wenigstens ein Elastomer-Copolymer eines konjugierten Diens und einer aromatischen Vinylverbindung,
- 20-150 Gew.-Teilen, bezogen auf 100 Gew.-Teile der Gesamtmenge Elastomer, eines Füllstoffs,
- 5 bis 60 Gew.-Teilen, bezogen auf 100 Gew.-Teile Elastomer, wenigstens eines Weichmachers,
- 1 - 25 Gew.-Teilen, bezogen auf 100 Gew.-Teile Elastomer, eines flüssigen Polymers und/oder Asphaltenes,
- gegebenenfalls bis zu 70 Gew.-Teile, bezogen auf die Gesamtelastomermenge, wenigstens eines Dien-Elastomers als weiterem Polymer sowie
- gegebenenfalls übliche Zusätze
dadurch gekennzeichnet, daß
- der Ruß einen mittleren Teilchendurchmesser von weniger als 19 nm (gemessen nach ASTM D 3849-89) und eine EM-Oberfläche von wenigstens 130 m²/g (gemessen nach ASTM D 3849-89) besitzt
- die Kautschukmischung als Füllstoff eine feinverteilte, gefällte Kieselsäure und den Ruß im Volumenverhältnis 1:1 bis 20:1 enthält, und
- der Weichmacher ausgewählt ist aus Dioctylphthalat, Dibutylphthalat, Dioctyladipat oder deren Gemischen.

2. Reifen nach Anspruch 1, dadurch gekennzeichnet, daß die feinverteilte, gefällte Kieselsäure eine BET-Fläche von 40 bis 350 m²/g, eine CTAB-Fläche von 50 bis 350 m²/g, einen mittleren Teilchendurchmesser von 10 bis 150 µm sowie eine DBP-Zahl von 50-350 ml/100 g besitzt.

3. Reifen nach Anspruch 1 oder 2, dadurch gekennzeichnet, daß sie Kieselsäure einer besonderen Morphologie enthält, die eine N₂-Oberfläche 35 m²/g bis 350 m²/g, bei einem BET/CTAB-Verhältnis von 0,8 bis 1,2 besitzen und gleichzeitig wie unten angegeben, je nach Oberflächenbereich ein Porenvolumen, gemessen mittels Quecksilberporosimetrie (DIN 66 133), Silanolgruppendichten, gemessen in Form der Sears-Zahlen sowie eine mittlere Aggregatgröße, gemessen mittels Photonenkorrelationsspektroskopie, besitzen:
| N₂-Oberfläche | Hg-Porosimetrie | Sears-Zahl V₂ | Mittlere Aggregatgröße |
|---|---|---|---|
| [m²/g] | [ml/g] | [ml] | [nm] |
| ≤ 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

4. Reifen nach Anspruch 3, dadurch gekennzeichnet, daß die Kieselsäure eine gute Vermahlbarkeit, wiedergegeben durch die mittlere Teilchengröße nach Malvern-Laserbeugung [D (4,3)] von ≤ 11 µm, insbesondere ≤ 10 µm, gemessen nach Vermahlung auf einer Alpine-Kolloplex-Prallstiftmühle (Z 160) bei einer Durchsatzleistung von 6 kg/h aufweist.

5. Reifen nach einem oder mehreren der Ansprüche 1 bis 4, dadurch gekennzeichnet, daß die Oberflächen der Kieselsäuren zusätzlich mit Silankupplungsmitteln der Formeln I bis III
[Rₙ¹-(RO)₃₋ₙ Si-(Alk)ₘ - (Ar)ₚ]_{q}[B] (I),
Rₙ¹ (RO)₃₋ₙ Si-(Alkyl) (II),
oder
Rₙ¹ (RO)₃₋ₙ Si-(Alkenyl) (III),
modifiziert sind, in denen bedeuten
B: -SCN, -SH, -Cl, -NH₂ (wenn q = 1) oder -Sₓ (wenn q = 2),
R und R¹: eine Alkylgruppe mit 1 bis 4 Kohlenstoffatomen, den Phenylrest, wobei alle Reste R und R¹ jeweils die gleiche oder eine verschiedene Bedeutung haben können, und R zusätzlich eine C₁-C₄-Alkoxygruppe sein kann,
n: 0,1 oder 2,
Alk: einen zweiwertigen geraden oder verzweigten Kohlenwasserstoffrest mit 1 bis 6 Kohlenstoffatomen,
m: 0 oder 1,
Ar: einen Arylenrest mit 6 bis 12 C-Atomen, bevorzugt 6 C-Atome,
p : 0 oder 1 mit der Maßgabe, daß p und n nicht gleichzeitig 0 bedeuten,
x : eine Zahl von 2 bis 8,
Alkyl: einen einwertigen geraden oder verzweigten gesättigten Kohlenwasserstoffrest mit 1 bis 20 Kohlenstoffatomen,
Alkenyl: einen einwertigen geraden oder verzweigten ungesättigten Kohlenwasserstoffrest mit 2 bis 20 Kohlenstoffatomen.

6. Reifen nach Anspruch 5, dadurch gekennzeichnet, daß das Silankupplungsmittel ausgewählt ist aus Bis(3-triethoxysilylpropyl)tetrasulfid, Bis(2-triethoxysilylethyl)-tetrasulfid, Bis(3-trimethoxysilylpropyl)tetrasulfid, Bis-(2-trimethoxysilylethyl)tetrasulfid, 3-Mercaptopropyltrimethoxysilan, 3-Mercaptopropyltriethoxysilan, 2-Mercaptoethyltrimethoxysilan, 2-Mercaptoethyltriethoxysilan, 3-Nitropropyltrimethoxysilan, 3-Nitropropyltriethoxysilan, 3-Chloropropyltrimethoxysilan, 3-Chloropropyltriethoxy-silan, 2-Chloroethyltrimethoxysilan, 2-Chloroethyltri-ethoxysilan, 3- Trimethoxysilylpropyl-N,N-dimethylthiocar-bamoyltetrasulfid, 3-Triethoxysilylpropyl-N,N-dimethylthiocarbamoyltetrasulfid, 2-Triethoxysilyl-N,N-dimethylthio-carbamoyltetrasulfid, 3-Trimethoxysilylpropylbenzothiazoltetrasulfid, 3-Triethoxysilylpropylbenzothiazoltetrasulfid, 3-Triethoxysilylpropylmethacrylatmonosulfid, 3-Trimethoxysilylpropylmethacrylatmonosulfid, Bis(3-diethoxymethylsilylpropyl)-tetrasulfid, 3-Mercaptopropyl-dimethoxymethylsilan, 3-Nitropropyldimethoxymethylsilan, 3-Chloropropyldimethoxymethylsilan, Dimethoxymethyl-silylpropyl-N,N-dimethylthiocarbamoyltetrasulfid, Dimeth-oxymethylsilylpropylbenzothiazoltetrasulfid, 3-Thiocyanatopropyltriethoxysilan, 3-Thiocyanatopropyltrimeth-oxysilan, Trimethoxyvinylsilan, Triethoxyvinylsilan.

7. Reifen nach Ansprüchen 5 oder 6, dadurch gekennzeichnet, daß die mit den Silankupplungsmitteln modifizierten Kieselsäuren erhältlich sind durch Umsetzung von 0,2 bis 30 Gew.-Teilen des Silankupplungsmittels bezogen auf 100 Gew.-Teile der Kieselsäure, wobei die Reaktion zwischen Kieselsäure und Silankupplungsmittel während der Mischungsherstellung (in situ) oder außerhalb (vormodifiziert) durchgeführt werden kann.

8. Reifen nach einem oder mehreren der Ansprüche 1 bis 7, dadurch gekennzeichnet, daß der Ruß eine Dibutylphthalat-Absorption (DBPA-Zahl) von 30 bis 180 cm³/100 g (ASTM D 2414), eine Iodzahl von 10 bis 250 g/kg (ASTM D 1510) sowie eine CTAB-Zahl von 5 bis 150 m²/g (ASTM D 3765) besitzt.

9. Reifen nach einem oder mehreren der Ansprüche 1 bis 8, dadurch gekennzeichnet, daß das konjugierte Dien ausgewählt ist aus 1,3-Butadien, Isopren, 2,3-Dimethyl-1,3-butadien, Chloropren, 1,3-Pentadien, Hexadien oder Gemischen davon.

10. Reifen nach einem oder mehreren der Ansprüche 1 bis 9, dadurch gekennzeichnet, daß die aromatische Vinylverbindung ausgewählt ist aus Styrol, α-Methylstyrol, p-Methylstyrol, o-Methylstyrol, p-Butylstyrol, Vinylnaphthalin oder Gemischen davon.

11. Reifen nach einem oder mehreren der Ansprüche 1 bis 10, dadurch gekennzeichnet, daß das flüssige Polymer flüssiges Polyisopren mit einem Molekulargewicht zwischen 10 000 und 60 000 ist.

## Claims

1. Tyre, comprising a tyre tread strip formed from a rubber mixture, which is vulcanised with sulphur and contains no aromatic process oils, comprising
- at least one elastomer copolymer of a conjugated diene and an aromatic vinyl compound,
- 20-150 parts by wt., relative to 100 parts by wt. of the entire quantity of elastomer, of a filler substance,
- 5 to 60 parts by wt., relative to 100 parts by wt. elastomer, at least of a plasticizer,
- 1 - 25 parts by wt., relative to 100 parts by wt. elastomer, of a liquid polymer and/or asphaltene,
- possibly up to 70 parts by wt., relative to the total elastomer quantity, at least of a diene elastomer as an additional polymer, and
- possibly conventional additives,
characterised in that
- the carbon black has an average particle diameter of less than 19 nm (measured according to ASTM D 3849-89) and an EM surface of at least 130 m²/g (measured according to ASTM D 3849-89),
- the rubber mixture contains, as the filler substance, a finely divided, precipitated silica and the carbon black in the volume ratio 1:1 to 20:1, and
- the plasticizer is selected from dioctylphthalate, dibutylphthalate, dioctyladipate or their mixtures.

2. Tyre according to claim 1, characterised in that the finely divided, precipitated silica has a BET area of 40 to 350 m²/g, a CTAB area of 50 to 350 m²/g, an average particle diameter of 10 to 150 µm, and a DBP number of 50-350 ml/100 g.

3. Tyre according to claim 1 or 2, characterised in that it contains silica of a particular morphology, which has a N₂ surface of 35 m²/g to 350 m²/g, at a BET:CTAB ratio of between 0.8 and 1.2 and has, at the same time, as mentioned below, depending on surface area, a pore volume measured by means of mercury porosimetry (DIN 66 133), silanol group densities measured in the form of Sears numbers and an average aggregate size measured by means of photon correlation spectroscopy:
| N₂ surface | Hg porosimetry | Sears number V₂ | Average aggregate size |
|---|---|---|---|
| [m²/g] | [ml/g] | [ml] | [nm] |
| < 100 | 2.5 - 3.4 | 6 - 12 | 900 - 1500 |
| 100 - 150 | 2.4 - 3.2 | 8 - 15 | 400 - 850 |
| 150 - 200 | 1.8 - 2.6 | 10 - 16 | 300 - 550 |
| > 200 | 1.6 - 2.3 | 12 - 20 | 250 - 520 |

4. Tyre according to claim 3, characterised in that the silica has a good comminutability, denoted by the average particle size according to Malvern laser diffraction [D (4.3)] of 11 µm, more especially 10 µm, measured after being ground on an Alpine Colloplex impact-type pinned disc mill (Z 160) with a throughput capacity of 6 kg/h.

5. Tyre according to one or more of claims 1 to 4, characterised in that the surfaces of the silicas are additionally modified with silane coupling agents of Formulae I to III
[Rₙ¹-(RO)₃₋ₙ Si- (Alk)ₘ - (Ar)ₚ]_{q}[B] (I),
Rₙ¹ (RO)₃₋ₙ Si-(Alkyl) (II),
or
Rₙ¹ (RO)₃₋ₙ Si-(Alkenyl) (III),
in which
B signifies -SCN, -SH, -Cl, -NH₂ (when q = 1) or
-Sₓ (when q = 2),
R and R¹ signify an alkyl group having 1 to 4 carbon atoms, the phenyl residue, all of the residues R and R¹ each being able to have the same meaning or a different meaning, and R may additionally be a C₁-C₄ alkoxy group,
n signifies 0.1 or 2,
Alk signifies a bivalent straight or branched hydrocarbon residue having 1 to 6 carbon atoms,
m signifies 0 or 1,
Ar signifies an arylene residue having 6 to 12 C atoms, preferably 6 C atoms,
p signifies 0 or 1, with the proviso that p and n do not simultaneously signify 0,
x signifies a number from 2 to 8,
Alkyl signifies a monovalent straight or branched saturated hydrocarbon residue having 1 to 20 carbon atoms, and
Alkenyl signifies a monovalent straight or branched unsaturated hydrocarbon residue having 2 to 20 carbon atoms.

6. Tyre according to claim 5, characterised in that the silane coupling agent is selected from bis(3-triethoxysilylpropyl)tetrasulphide, bis(2-triethoxysilylethyl)-tetrasulphide, bis(3-trimethoxysilylpropyl)tetrasulphide, bis-(2-trimethoxysilylethyl)tetrasulphide, 3-Mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropyltrimethoxysilane, 3-chloropropyltriethoxy-silane, 2-chloroethyltrimethoxysilane, 2-chloroethyltri-ethoxysilane, 3- trimethoxysilylpropyl-N,N-dimethylthiocar-bamoyltetrasulphide, 3-triethoxysilylpropyl-N,N-dimethylthiocarbamoyltetrasulphide, 2-triethoxysilyl-N,N-dimethylthio-carbamoyltetrasulphide, 3-trimethoxysilylpropylbenzothiazoltetrasulphide, 3-triethoxysilylpropylbenzothiazoltetrasulphide, 3-triethoxysilylpropylmethacrylatmonosulphide, 3-trimethoxysilylpropylmethacrylate monosulphide, bis(3-diethoxymethylsilylpropyl)-tetrasulphide, 3-mercaptopropyl-dimethoxymethylsilane, 3-nitropropyldimethoxymethylsilane, 3-chloropropyldimethoxymethylsilane, dimethoxymethyl-silylpropyl-N,N-dimethylthiocarbamoyltetrasulphide, dimeth-oxymethylsilylpropylbenzothiazoltetrasulphide, 3-thiocyanatopropyltriethoxysilane, 3-thiocyanatopropyltrimeth-oxysilane, trimethoxyvinylsilane, triethoxyvinylsilane.

7. Tyre according to claims 5 or 6, characterised in that the silicas, modified with the silane coupling agents, are obtainable by converting between 0.2 and 30 parts by wt. of the silane coupling agent relative to 100 parts by wt. of the silica, the reaction between silica and silane coupling agent being accomplishable during the mixture production (in situ) or externally (premodified).

8. Tyre according to one or more of claims 1 to 7, characterised in that the carbon black has a dibutylphthalate absorption (DBPA number) of 30 to 180 cm³/100 g (ASTM D 2414), an iodine number of 10 to 250 g/kg (ASTM D 1510) and a CTAB number of 5 to 150 m²/g (ASTM D 3765).

9. Tyre according to one or more of claims 1 to 8, characterised in that the conjugated diene is selected from 1,3-butadiene, isoprene, 2,3-dimethyl-1,3-butadiene, chloroprene, 1,3-pentadiene, hexadiene or mixtures thereof.

10. Tyre according to one or more of claims 1 to 9, characterised in that the aromatic vinyl compound is selected from styrene, α-methylstyrene, p-methylstyrene, o-methylstyrene, p-butylstyrene, vinylnaphthaline or mixtures thereof.

11. Tyre according to one or more of claims 1 to 10, characterised in that the liquid polymer is liquid polyisoprene with a molecular weight between 10 000 and 60 000.

## Revendications

1. Pneus comprenant une bande de roulement de pneu constituée d'un mélange de caoutchouc vulcanisé avec du soufre, ne contenant pas d'huiles de procédés aromatiques, comprenant
◆ au moins un copolymère élastomère d'un diène conjugué et d'un composé vinylique aromatique,
◆ 20-150 parties en poids par rapport à 100 parties en poids de la quantité totale d'élastomère, d'une charge,
◆ 5 à 60 parties en poids, par rapport à 100 parties en poids d'élastomère, d'au moins un plastifiant,
◆ 1-25 parties en poids, par rapport à 100 parties en poids d'élastomère, d'un polymère liquide et/ou d'asphaltène,
◆ le cas échéant jusqu'à 70 parties en poids, par rapport à la quantité totale d'élastomère, d'au moins un élastomère de diène comme autre polymère ainsi que
◆ le cas échéant les additifs habituels,
caractérisé en ce que
◆ le noir de fumée possède un diamètre particulaire moyen inférieur à 19 nm (mesuré selon la norme ASTM D 3849-89) et une surface EM d'au moins 130 m²/g (mesurée selon ASTM D 3849-89),
◆ le mélange de caoutchouc contient comme charge un acide silicique précipité finement divisé et le noir de fumée dans un rapport volumique de 1:1 à 20:1, et
◆ le plastifiant est choisi parmi le phtalate de dioctyle, le phtalate de dibutyle, l'adipate de dioctyle ou leurs mélanges.

2. Pneus selon la revendication 1, caractérisés en ce que l'acide silicique précipité finement divisé présente une surface BET de 40 à 350 m²/g, une surface CTAB de 50 à 350 m²/g, un diamètre particulaire moyen de 10 à 150 µm, ainsi qu'un indice DBP de 50-350 ml/100 g.

3. Pneu selon la revendication 1 ou 2, caractérisés en ce qu'il contient de l'acide silicique d'une morphologie particulière, qui possède une surface N₂ de 35 m²/g à 350 m²/g, dans un rapport BET/CTAB de 0,8 à 1,2 et possède simultanément, comme il est indiqué ci-après, selon le domaine de surface, un volume de pores, mesuré par porosimétrie au mercure (norme DIN 66133), des densités de groupes silanol, mesurées sous la forme de l'indice Sears ainsi qu'une taille moyenne d'agrégat, mesurée par spectroscopie de corrélation photonique, indiqués ci-après :
| Surface N₂ | Porosimétrie | Indice Sears V₂ | Taille moyenne |
|---|---|---|---|
| [m²/g] | Hg [ml/g] | [ml] | [nm] |
| < 100 | 2,5 - 3,4 | 6 - 12 | 900 - 1500 |
| 100 - 150 | 2,4 - 3,2 | 8 - 15 | 400 - 850 |
| 150 - 200 | 1,8 - 2,6 | 10 - 16 | 300 - 550 |
| > 200 | 1,6 - 2,3 | 12 - 20 | 250 - 520 |

4. Pneu selon la revendication 3, caractérisé en ce que l'acide silicique présente une bonne aptitude au broyage, donnée par la granulométrie moyenne selon la diffraction au laser de Malvern [D (4,3)] ≤ 11 µm, en particulier ≤ 10 µm, mesurée après broyage dans un broyeur à pointe et à impact Alpine-Kolloplex (Z 160) à une capacité de 6 kg/heure.

5. Pneu selon l'une ou plusieurs des revendications 1 à 4, caractérisé en ce que la surface des acides siliciques est en outre modifiée par des agents de couplage à base de silane de formules I à III
[Rₙ¹-(RO)₃₋ₙ Si-(Alk)ₘ - (Ar)ₚ]_{q}[B] (I),
Rₙ¹-(RO)₃₋ₙ Si-(Alkyle) (II),
ou
Rₙ¹-(RO)₃₋ₙ Si-(Alcényle) (III),
dans lesquelles :
◆ B :représente -SCN, -SH, -Cl, -NH₂ (lorsque q = 1) ou -Sₓ (lorsque q = 2),
◆ R et R¹ : représentent un groupe alkyle ayant de 1 à 4 atomes de carbone, le radical phényle, où tous les radicaux R et R¹ peuvent avoir une signification identique ou différente et R peut représenter en outre un groupe alcoxy en C₁ à C₄,
◆ N : vaut 0, 1 ou 2
◆ Alk : représente un radical hydrocarboné à chaîne droite ou ramifiée bivalent ayant 1 à 6 atomes de carbone,
◆ m : vaut 0 ou 1,
◆ Ar:représente un radical arylène ayant 6 à 12 atomes de carbone, de préférence 6 atomes de carbone,
◆ p : vaut 0 ou 1, sous réserve que p et n ne valent pas tous les deux simultanément 0,
◆ x : représente un nombre de 2 à 8,
◆ alkyle :représente un radical hydrocarboné saturé à chaîne droite ou ramifié monovalent ayant 1 à 20 atomes de carbone,
◆ alcényle : représente un radical hydrocarboné insaturé à chaîne droite ou ramifiée monovalent ayant 2 à 20 atomes de carbone, de préférence 2 à 8 atomes de carbone.

6. Pneu selon la revendication 5, caractérisé en ce que l'agent de couplage à base de silane est choisi parmi le bis(3-triéthoxysilylpropyl)-tétrasulfure, le bis(2-triéthoxysilyléthyl)-tétrasulfure, le bis(3-triméthoxy-silylpropyl)tétrasulfure, le bis(2-triméthoxysilyléthyl)-tétrasulfure, le 3-mercaptopropyltriméthoxysilane, le 3-mercaptopropyltriéthoxysilane, le 2-mercaptoéthyltriméthoxysilane, le 2-mercaptoéthyltriéthoxysilane, le 3-nitropropyltriméthoxysilane, le 3-nitropropyltriéthoxy-silane, le 3-chloropropyltriméthoxysilane, le 3-chloro-propyltriéthoxysilane, le 2-chloroéthyltriméthoxysilane, le 2-chloroéthyltriéthoxysilane, le 3-triméthoxysilylpropyl-N,N-diméthylthiocarbamoyltétrasulfure, le 3-triéthoxy-silylpropyl-N,N-diméthylthiocarbamoyl-tétrasulfure, le 2-triéthoxysilyl-N,N-diméthylthiocarbamoyltétrasulfure, le 3-triméthoxysilylpropybenzothiazoltétrasulfure, le 3-triéthoxysilylpropylbenzothiazoltétrasulfure, le 3-tri-éthoxysilylpropyleméthacrylate monosulfure, le 3-tri-méthoxysilylpropylméthacrylate monosulfure, le bis(3-diéthoxyméthylsilylpropyl)-tétrasulfure, le 3-mercaptopropyldiméthoxyméthylsilane, le 3-nitropropyldi-méthoxyméthyl-silane, le 3-chloropropyldiméthoxyméthylsilane, le diméthoxy-méthylsilylpropyl-N,N-diméthylthiocarbamoyltétra-sulfure, le diméthoxyméthyl-silylpropylbenzothiazole-tétrasulfure, le 3-thiocyanatopropyltriéthoxysilane, le 3-thiocyanatopropyltriméthoxysilane, le triméthoxyvinyl-silane, le triéthoxyvinylsilane.

7. Pneu selon les revendications 5 ou 6, caractérisé en ce que les acides siliciques modifiés par les agents de couplage à base de silane peuvent être obtenus par réaction de 0,2 à 30 parties en poids de l'agent de couplage à base de silane par rapport à 100 parties en poids de l'acide silicique, la réaction entre l'acide silicique et l'agent de couplage à base de silane pouvant être effectuée au cours du processus de mélange (in situ) ou en dehors (par une prémodification).

8. Pneu selon une ou plusieurs des revendications 1 à 7, caractérisé en ce que le noir de fumée possède une absorption du phtalate de dibutyle (indice DBPA) de 30 à 180 cm³/100 g (norme ASTM D 2414), un indice d'iode de 10 à 250 g/kg (ASTM D 1510) ainsi qu'un indice CTAB de 5 à 150 m²/g (ASTM D 3765).

9. Pneu selon une ou plusieurs des revendications 1 à 8, caractérisé en ce que le diène conjugué est choisi parmi le 1,3-butadiène, l'isoprène, le 2,3-diméthyl-1,3-butadiène, le chloroprène, le 1,3-pentadiène, l'hexadiène ou leurs mélanges.

10. Pneu selon une ou plusieurs des revendications 1 à 9, caractérisé en ce que le composé vinylique aromatique est choisi parmi le styrène, l'α-méthylstyrène, le p-méthylstyrène, le o-méthylstyrène, le p-butylstyrène, le vinylnaphtalène, ou leurs mélanges.

11. Pneu selon une ou plusieurs des revendications 1 à 10, caractérisé en ce que le polymère liquide est le polyisoprène liquide ayant un poids moléculaire compris entre 10 000 et 60 000.
